# EUROPÄISCHE PATENTSCHRIFT

(11) **EP 1 496 285 B1**
(45) Veröffentlichungstag und Bekanntmachung des Hinweises auf die Patenterteilung: **17.10.2007**
(21) Anmeldenummer: 04013317.5
(22) Anmeldetag: 05.06.2004
(51) Int. Cl.: F16F 9/50, F16F 9/504, F16F 9/58, F16F 9/512, F16F 9/342

(54) **Schwingungsdämpfer mit amplitudenabhängiger Dämpfung**
Vibration damper with amplitude-dependent damping
Amortisseur de vibrations avec amortissement dépendant de l'amplitude

(30) Priorität: 08.07.2003 DE 10330937; 04.11.2003 DE 10351353
(43) Veröffentlichungstag der Anmeldung: 12.01.2005
(60) Teilanmeldung: 06009114.7
(73) Patentinhaber: ThyssenKrupp Bilstein Suspension GmbH, 58256 Ennepetal (DE)
(72) Erfinder: Hartig, Ulrich, Dipl.-Ing., 54429 Mandern (DE); Götz, Ole, Dipl.-Ing., 21075 Hamburg (DE); Nevoigt, Andreas, Dr., 58135 Hagen (DE); Feist, Dirk, 44627 Herne (DE); Weimann, Claus, Dipl.-Ing., 58300 Wetter (DE); Lauer, Elmar, Dipl.-Ing., 66709 Weiskirchen (DE); Schmidt, Markus, Dipl.-Ing., 54294 Trier (DE); Kaup, Andreas, Dipl.-Ing., 66620 Nonnweiler (DE); Eisenring, Tina, 54429 Mandern (DE); Körner, Joachim, 54429 Mandern (DE); Schreiner, Alfons, 54413 Gusenburg (DE); Jost, Thomas, 54429 Schillingen (DE); Burböck, Walter, 70188 Stuttgart (DE); Wilhelm, Ralf, Dipl.-Ing., 75394 Oberreichenbach (DE)
(74) Vertreter: Adams, Steffen

(56) Entgegenhaltungen:
- EP-A- 0 969 223
- EP-A- 1 152 166
- EP-A- 1 544 498
- WO-A-95/06180
- DE-U1- 7 739 537
- US-A- 2 865 396
- US-A- 5 788 372
- PATENT ABSTRACTS OF JAPAN Bd. 0040, Nr. 49 (M-007), 15. April 1980 (1980-04-15) & JP 55 017709 A (TOKICO LTD), 7. Februar 1980 (1980-02-07)
- PATENT ABSTRACTS OF JAPAN Bd. 0130, Nr. 83 (M-802), 27. Februar 1989 (1989-02-27) & JP 63 280941 A (TOYOTA MOTOR CORP), 17. November 1988 (1988-11-17)

## Beschreibung

Die Erfindung betrifft einen Schwingungsdämpfer mit amplitudenabhängiger Dämpfung mit einem hydraulisch parallel zum Dämpferkolben angebundenen zylindrischen Ausgleichsraum nach dem Oberbegriff des Anspruchs 1.

Um zu erreichen, dass Schwingungsdämpfer, insbesondere zum Dämpfen von Fahrzeugrädern, bei Schwingungen mit hoher Frequenz und geringer Amplitude die Dämpfungswirkung absenken, sind Schwingungsdämpfer mit amplitudenabhängiger Dämpfung nach dem Oberbegriff des Anspruchs 1 entwickelt worden. Ein derartiger Schwingungsdämpfer ist in der EP 1 152 166 A1 beschrieben. Bei diesem Schwingungsdämpfer ist hydraulisch parallel ein zylindrischer Ausgleichsraum angebunden, der durch einen axial verschiebbaren Trennkolben aufgeteilt ist. Der Trennkolben ist an wenigstens einer Deckelfläche mit einem elastisch nachgiebig ausgebildeten Puffer ausgebildet. Nachteilig ist bei dem hier beschriebenen Schwingungsdämpfer dieser elastische Puffer als in einer Nut liegender O-Ring ausgebildet. Seine Pufferwirkung ist sehr hart, sodass das Anschlagen des Trennkolbens an den Boden des zylindrischen Ausgleichsraums zu Schlägen führt, die zumindest hörbar und im Extremfall auch spürbar im Fahrzeug wahrnehmbar sind. Weiterhin führt nachteilig diese schlagartige Beanspruchung der Ringe zu einem schnellen Verschleiß. Zusätzlich bewirkt ein harter Puffer einen schnellen Kraftübergang zwischen weicher und harter Dämpferkennlinie. Dies kann im Umschaltpunkt zu unzulässig hohen Beschleunigungen an der Kolbenstange führen, was im Auto als störendes Geräusch oder als unharmonisches Dämpfungsverhalten wahrgenommen werden kann.

Der Erfindung liegt die Aufgabe zugrunde, den gattungsgemäßen Schwingungsdämpfer derartig weiterzubilden, dass ein weicherer Anlauf des Trennkolbens an seine Endposition im Ausgleichsraum erreicht wird.

Diese Aufgabe wird durch die Merkmale des Anspruchs 1 gelöst.

Vorteilhafte Aus- und Weiterbildungen des Erfindungsgegenstandes sind in den Unteransprüchen beschrieben.

Dadurch, dass der Puffer in eine axiale Durchdringung des Kolbenkörpers in Form einer zentralen Bohrung eingesetzt ist, wird vorteilhaft erreicht, dass eine gleichmäßigere Verteilung der Verformung auf einen größeren Bereich des Elastomeranschlages und damit geringere lokale Spannungen im Material erreicht werden. Dadurch kann eine weichere Federungscharakteristik erreicht werden. Weiterhin vorteilhaft ist eine bessere Verklebung bzw. Vulkanisierung mit dem Grundkörper des Trennkolbens möglich. Darüber hinaus wird vorteilhaft die Geräuschentwicklung verringert und gleichzeitig die Dauerfestigkeit des Trennkolbens erhöht, wodurch eine Lebensdauererhöhung des Gesamtdämpfers erreicht wird. In besonderen Ausbildungsfällen, wenn die Durchdringung durch den Grundkörper des Kolbens einen sehr großen Durchmesser aufweist, kann der Puffer auch einteilig mit beidseitig angeordneten, beide Deckelflächen des Kolbengrundkörpers übergreifende Puffererhöhungen ausgebildet werden. Durch diese Ausbildung ist der Puffer zusätzlich zu anderen Befestigungsmaßnahmen auch noch formschlüssig mit dem Kolbengrundkörper verbunden.

Ein Ausführungsbeispiel der Erfindung ist in der Zeichnung dargestellt und wird im Folgenden näher beschrieben. Es zeigen
- Fig. 1: einen Schnitt durch einen Schwingungsdämpfer im Bereich des Arbeitskolbens,
- Fig. 2 und 3: unterschiedliche Ausbildungsformen des Trennkolbens,
- Fig. 4 und 5: Ausschnitte entsprechend Fig. 1 mit alternativen Ausbildungen des Gehäuses des Ausgleichsraumes,
- Fig. 6: ein Kraft-Weg-Diagramm für den Trennkolbenanlauf und
- Fig. 7: einen vergrößerten Ausschnitt aus Fig. 1.

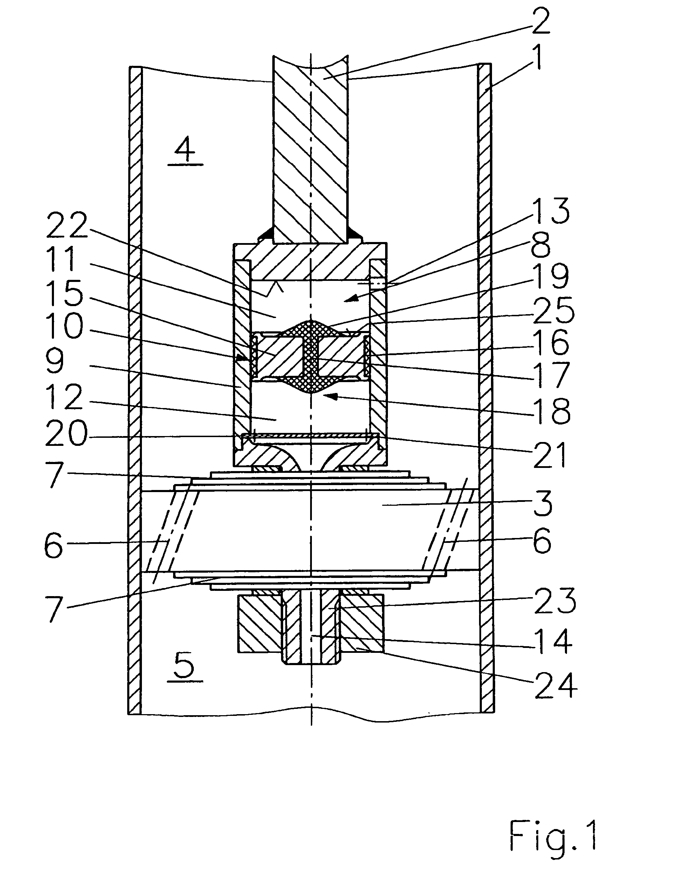

Fig. 1 zeigt einen Schnitt durch einen Stoßdämpfer im Bereich des Dämpferkolbens. Hierbei handelt es sich um einen Einrohrstoßdämpfer. Ein oben und unten verschlossenes Dämpferrohr 1 ist mit Dämpfungsflüssigkeit gefüllt. Einseitig abgedichtet taucht eine Kolbenstange 2 oszillierend in das Dämpferrohr 1 ein. Dämpferrohr 1 und Kolbenstange 2 sind mit nicht dargestellten Anbindungen mit dem Fahrzeugrad und dem Aufbau eines Fahrzeuges verbunden. Am in das Dämpferrohr 1 eintauchenden Ende der Kolbenstange 2 ist ein Arbeitskolben 3, im Ausführungsbeispiel indirekt angebunden, der den Innenraum des Dämpferrohrs 1 in zwei Dämpfungsräume 4, 5 aufteilt. Über Durchtrittskanäle 6, die jeweils einseitig durch Federscheibenpakete 7 federnd abgedeckt sind, kann die Dämpfungsflüssigkeit von einem Dämpfungsraum 4, 5 in den anderen Dämpfungsraum 5, 4 strömen, wobei das jeweilige Federscheibenpaket 7 für eine Dämpfung dieser Strömung sorgt.

Bei Schwingungen zwischen Kolbenstange 2 und Dämpferrohr 1 mit geringer Amplitude ergibt sich das Problem, dass hier nur geringe Dämpfkräfte benötigt werden, um den Fahrkomfort nicht unnötig zu verschlechtern, die Dämpfkraftcharakteristik der verwendeten Hauptventile mit Federscheibenbeplattung eine entsprechende Abstimmung aber nicht ermöglicht, ohne gleichzeitig die Dämpfkraft auch im Bereich großer Anregungsamplituden abzusenken, was die Fahrdynamik und Fahrsicherheit negativ beeinflussen würde. Von daher ist hydraulisch parallel zum Arbeitskolben 3 ein zylindrischer Ausgleichsraum 8 in einer Kolbenstangenverlängerung 9 untergebracht. Der Ausgleichsraum 8 wird mittels eines Trennkolbens 10 in zwei Teilräume 11, 12 getrennt. Diese Teilräume 11, 12 sind jeweils über Durchtrittsöffnungen, vorzugsweise Bohrungen 13, 14, mit jeweils einem Dämpfungsraum 4, 5 hydraulisch verbunden.

Der Trennkolben 10 weist einen Kolbengrundkörper 15 auf, welcher über eine radial außen liegende Gleitmanschette 16 radial an der Zylinderinnenwand des Ausgleichsraums 8 anliegt, wodurch der Trennkolben 10 im Ausgleichsraum 8 axial leicht verschieblich ist.

Der Trennkolben 10 weist weiterhin eine axiale Durchdringung 17 auf, die im Ausführungsbeispiel als zentrale Bohrung ausgebildet ist. In diese axiale Durchdringung 17 ist ein Puffer 18 eingesetzt. Der Puffer 18 überragt beide Deckelflächen des Kolbengrundkörpers 15 mit einer zentralen Wölbung 19. In Fig. 1 ist diese zentrale Wölbung 19 beidseitig am Trennkolben 10 vorgesehen und etwa kegelförmig ausgebildet. Des Weiteren ist in Fig. 1 der Puffer mit seinem die axiale Durchdringung 17 durchdringenden Steg und beiden zentralen Wölbungen 19 einteilig in bzw. an den Kolbengrundkörper 15 vulkanisiert oder gespritzt.

Die den unteren Teilraum 12 des Ausgleichsraums 8 mit dem unteren Dämpfungsraum 5 verbindende Bohrung 14 ist als zentrale axiale Bohrung durch die Kolbenstangenverlängerung 9 geführt. Dieses hätte zur Folge, dass bei Anlaufen des Trennkolbens 10 gegen den gemäß Fig. 1 unteren Boden des Ausgleichsraums 8 ein schlagartiges Verschließen der Bohrung 14 erfolgen würde, wodurch Schläge im gesamten System induziert würden, die nicht gewünscht sind und der Anschlagpuffer am Bohrungsrand schnell zerstört würde. Von daher ist die zentrale Bohrung 14 ausgleichsraumseitig mittels einer Trennscheibe 20 abgedeckt. Für die Zuströmung der Dämpfungsflüssigkeit von der Bohrung 14 in den unteren Teilraum 12 des Ausgleichsraums 8 sind am Rand der Trennscheibe 20 mehrere Durchdringungen 21 vorgesehen. Somit ist auch bei der Konstruktion gemäß Fig. 1 ein weicher Anlauf des Trennkolbens 10 gegen den hier als Trennscheibe 20 ausgebildeten Boden des Ausgleichsraums 8 gewährleistet. Bezüglich des in Fig. 1 oberen Bodens 22 ist das bereits durch die radial nach außen gerichtete Bohrung 13 gewährleistet. Alternativ kann auf die Trennscheibe 20 verzichtet werden, wenn die Bohrung 14 durch den Aufnahmezapfen 23 als Sackloch ausgeführt ist und den unteren Boden nicht durchdringt. Das Sackloch wird dann über einen oder mehrere Zusatzkanäle mit dem Teilraum 12 verbunden. Die Kanalöffnungen liegen dabei radial außen auf dem unteren Boden, sodass der Puffer 18 die Öffnungen nicht versperren kann und nicht vom Öffnungsrand zerstört wird.

Die den Ausgleichsraum 8 aufnehmende Kolbenstangenverlängerung 9 ist in Fig. 1 als Schweißkonstruktion vorgesehen. Sie weist zum Ende hin einen Aufnahmezapfen 23 auf, auf dem mittels einer Schraubverbindung mit einer Mutter 24 der Arbeitskolben 3 befestigt ist.

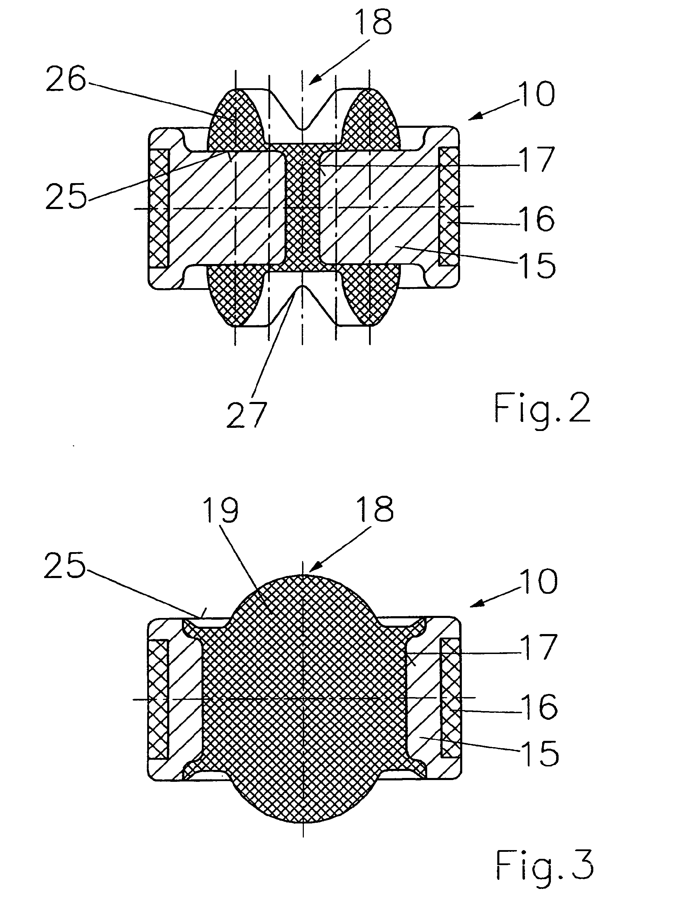

In Fig. 2 wird eine alternative Ausbildung eines Trennkolbens 10 gezeigt. Der Kolbengrundkörper 15 und die Gleitmanschette 16 entsprechen der Ausbildung gemäß Fig. 1, ebenso auch die axiale Durchdringung 17. Lediglich der Puffer 18 ist vor den Deckelflächen 25 des Kolbengrundkörpers 15 als ringförmige Wulst 26 ausgebildet. Um ein Kleben der Wulst 26 am Boden 22 des Ausgleichsraums 8 zu verhindern, ist in die Wulst 27 jeweils einseitig wenigstens eine radiale Vertiefung 27 vorgesehen. Der Puffer 18 ist so ausgebildet, dass beim Einfedern die zentrale Aussparung nicht verschlossen wird, was vorteilhaft für den Einbau in ein Gehäuse mit zentralem Zuströmkanal ist. Puffer 18 und Kolbengrundkörper 15 sind so ausgelegt, dass der Puffer 18 vollständig in den Absatz des Kolbengrundkörpers 15 gedrückt wird und der Kolbengrundkörper 15 mit seiner äußeren Ringfläche auf den Boden anschlägt. Dieser Endanschlag begrenzt die Verformung des Puffers 18 und erhöht somit die Lebensdauer des Trennkolbens 10.

Der Trennkolben 10 gemäß Fig. 3 entspricht vom Aufbau her dem Trennkolben gemäß Fig. 1. Bei dieser Ausbildung ist lediglich die axiale Durchdringung 17 mit einem sehr großen Durchmesser ausgebildet. Die zentrale Wölbung 19 ist kugelartig ausgebildet. Durch die besondere Ausbildung des Trennkolbens 10 gemäß Fig. 3 wird es möglich, den Puffer 18 unabhängig vom Kolbengrundkörper 15 auszubilden und diese beiden Teile als Schnapp-Rast-Verbindung formschlüssig miteinander zu verbinden. Bei der Ausbildung gemäß Fig. 3 ist damit eine einfachere Anpassung des Trennkolbens 10 an die jeweiligen Anforderungen möglich, da unterschiedliche Puffer 18 mit unterschiedlichen Kolbengrundkörpern 15 beliebig kombiniert werden können. Alternativ kann der Trennkolben 10 geklebt, vulkanisiert oder im Zwei-Komponenten-Kunststoffspritzverfahren hergestellt werden. Auch bei dem Trennkolben 10 nach Fig. 3 dient die äußere Ringfläche als Endanschlag, um die Verformungswege des Puffers 18 zu begrenzen. Hier wird das Puffermaterial jedoch nicht wie in Fig. 2 in den Absatz im Kolbengrundkörper 15 gedrückt, sondern hauptsächlich axial durch den Kolbengrundkörper 15 verformt.

Die Kolbenstangenverlängerung 9, die in der Ausbildung gemäß Fig. 1 als Schweißkonstruktion ausgebildet ist, kann auch als Schraubkonstruktion ausgebildet sein.

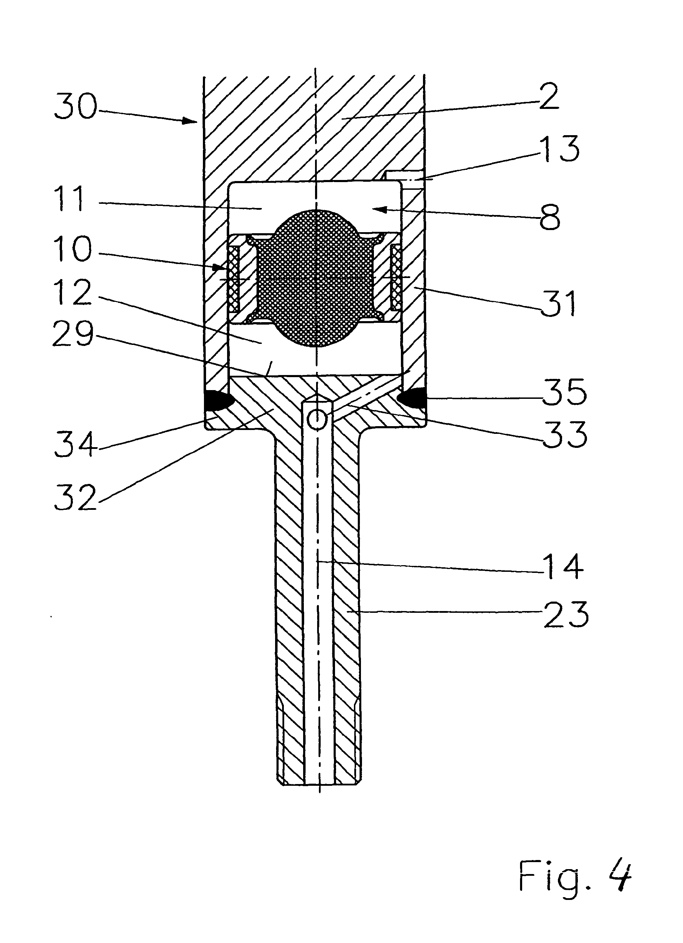

Die in Fig. 4 dargestellte Ausbildung zur Aufnahme des Ausgleichsraums 8 ist besonders wirtschaftlich herstellbar. Bei dieser Ausbildung ist der Ausgleichsraum 8 als Sackloch am Ende der Kolbenstange 2 angebracht. Die Herstellung dieser Sackbohrung kann in üblicher Weise spanabhebend erfolgen. Es ist jedoch auch möglich, dass die Sackbohrung über einen Kaltfließprozess hergestellt wird.

Wichtig ist, dass die Wand 31 am Ende 30 der Kolbenstange 2 einteilig an die Kolbenstange 2 angeformt ist.

Zur hydraulischen Verbindung des oberen Teilraums 11 des Ausgleichsraums 8 mit dem oberen Dämpfungsraum 4 ist, wie auch bei den anderen Versionen, eine Querbohrung 13 vorgesehen.

Zur weiteren Fertigung ist vorgesehen, dass der Aufnahmezapfen 23 beispielsweise auch als Fließpressteil hergestellt wird und, wie in Fig. 1, einen Anschlussflansch 32 aufweist. Die zentrale Bohrung 14 durch den Aufnahmezapfen 23 ist als Sackbohrung ausgebildet, die den Anschlussflansch nicht durchdringt. Querbohrungen 33 laufen schräg durch den Anschlussflansch 32 und münden zum einen in das Sackende der Bohrung 14 und zum zweiten am Rand des Bodens 29 des Ausgleichsraums 8.

Im Ausführungsbeispiel gemäß Fig. 4 ist der Trennkolben 10 gemäß Fig. 3 ausgebildet.

Die endgültige Montage der Kolbenstange einschließlich der Kolbenstangenverlängerung gemäß Fig. 4 erfolgt in der Form, als in die den Ausgleichsraum 8 bildende Sackbohrung der Trennkolben 10 eingesetzt wird. Danach wird der einen Bund 34 aufweisende Anschlussflansch 32 in das Bohrungsende des Ausgleichsraums 8 eingesetzt. Vorzugsweise bilden die Innenbohrung der den Ausgleichsraum 8 bildenden Wand 31 und der sich an den Bund 34 des Anschlussflansches 32 anschließende Rezess eine Presspassung, sodass bereits zum Ende dieses Montageschrittes eine haftende Verbindung zwischen diesen beiden Teilen hergestellt ist. Danach werden die Wand 31 am Ende 30 der Kolbenstange 2 und der Anschlussflansch 32 des Aufnahmezapfens 23 mittels Schweißen, insbesondere mittels Laserschweißen oder Elektronenstrahlschweißen, miteinander verbunden.

Durch die Gestaltung der Fügestellen als Presspassung wird erreicht, dass möglichst keine Lufteinschlüsse beim anschließenden Schweißen entstehen. Wie in Fig. 4 dargestellt, ist die Schweißtiefe größer als die Dicke der Wand 31. Damit wird sichergestellt, dass auch der Grund der Fügestelle mit aufgeschmolzen wird.

Der Nahtauslauf der Schweißnaht 35 wird mit geringerer Schweißleistung beaufschlagt. Dadurch wird sichergestellt, dass beim Schweißen kein Einstichloch entstehen kann, was zu einer Schwachstelle insbesondere hinsichtlich Biegebelastung führen würde.

Um die Rundlauftoleranz zwischen den beiden durch Schweißen zu verbindenden Teilen zu verbessern, wird die Schweißung in mindestens zwei Umläufen durchgeführt, wobei beim ersten Umlauf eine geringere Schweißleistung vorgesehen wird. Durch diese Maßnahme wird der Wärmeverzug minimiert. Insgesamt wird mit einer hohen Schweißgeschwindigkeit gefahren, damit möglichst wenig Wärmeeintrag in das Bauteil gelangt, wodurch sichergestellt wird, dass der Trennkolben 10 nicht durch Einbringung erhöhter Wärme geschädigt wird.

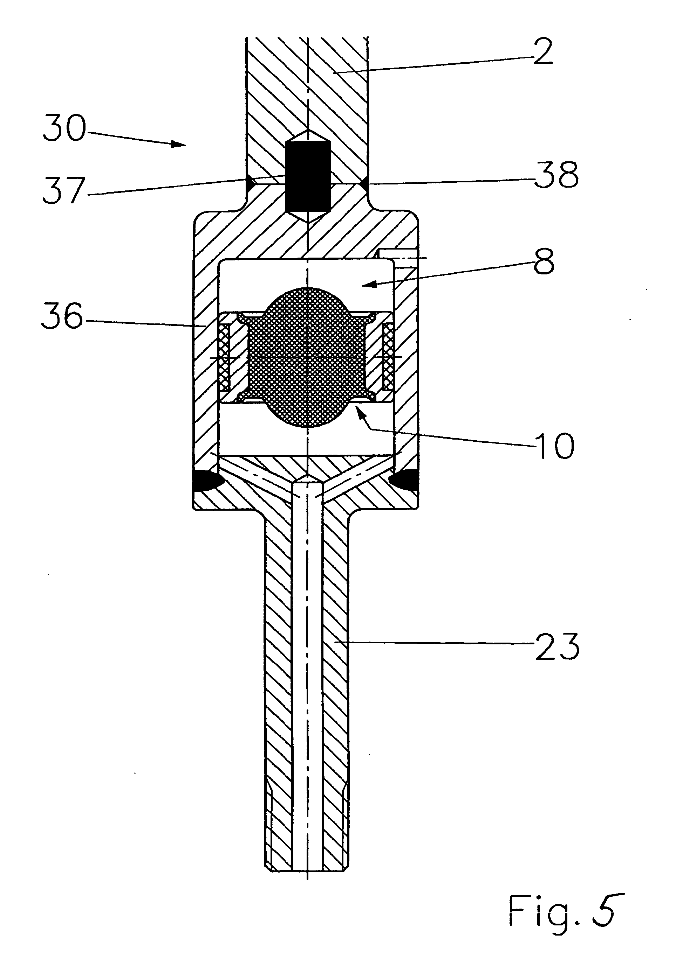

Bei der Ausbildung gemäß Fig. 5, die einen Aufbau ähnlich Fig. 1 zeigt, ist vorgesehen, dass das Ende 30 der Kolbenstange 2 und das sich anschließende Gehäuse 36 für den Ausgleichsraum 8 mittels eines Passstiftes 37 miteinander verbunden werden, bevor diese beiden Teile mittels der in Fig. 5 dargestellten Schweißnaht 38 verbunden werden. Diese Maßnahme hat zum Ziel, dass die durch die Schweißnaht 38 miteinander zu verbindenden Bauteile konzentrisch zueinander geführt sind.

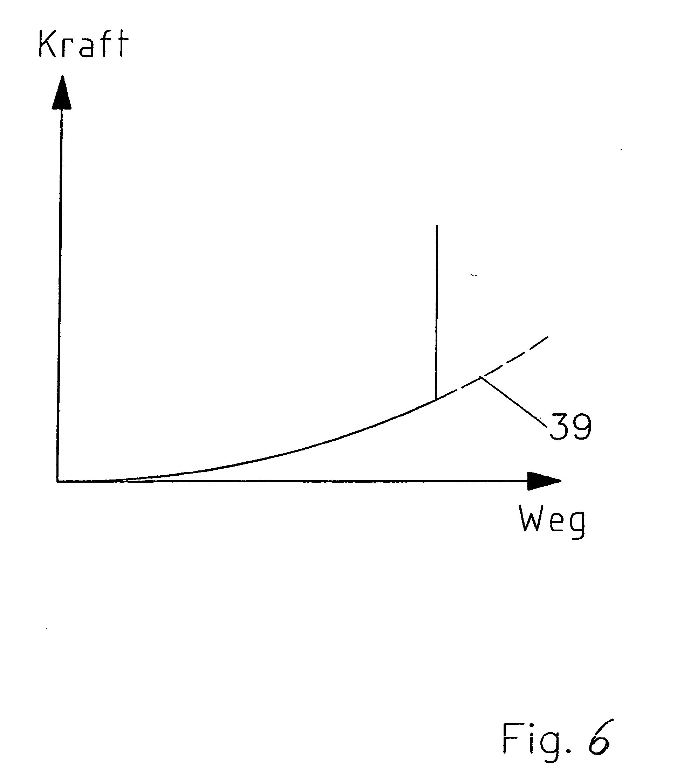

In Fig. 6 ist ein Kraft-Weg-Diagramm dargestellt, das besonders für einen Trennkolben 10 entsprechend Fig. 3 vorgesehen ist. Diesem Kraft-Weg-Diagramm ist zu entnehmen, dass zum einen ein weicher Anlauf des Trennkolbens 10 gegen den jeweiligen Boden 22, 29 erreicht wird. Bevor jedoch der Puffer 18 so weit verformt ist, dass seine Verformung zu einem stark progressiven Kraftanstieg 39 führt, kommt der Trennkolben 10 mit seinen Deckelflächen 25 gegenüber dem jeweiligen Boden 22, 29 zur Anlage. Dadurch wird erreicht, dass das Kraft-Weg-Verhältnis der Puffer 18 sehr toleranzunempfindlich reagiert.

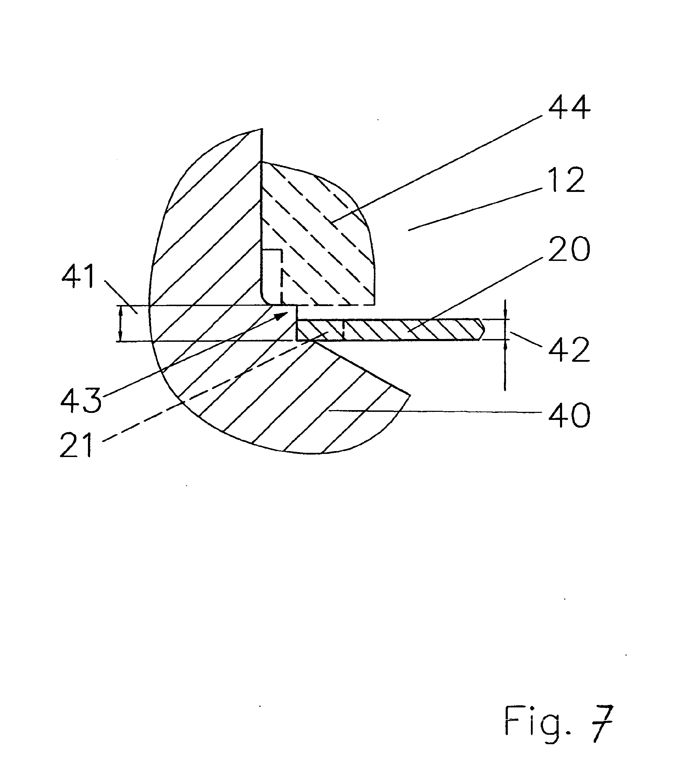

Fig. 7 zeigt eine vergrößerte Darstellung der Befestigung der Trennscheibe 20 in der Kolbenstangenverlängerung 9 bzw. dem mit dem Aufnahmezapfen 23 verbundenen Bodenbereich 40, der den unteren Teilraum 12 abschließt.

Bei dieser Ausbildung ist in den Bodenbereich 40 eine Vertiefung eingebracht, deren Durchmesser etwa dem Durchmesser der Trennscheibe 20 entspricht. Die Tiefe 41 der Vertiefung ist größer als die Dicke 42 der Trennscheibe 20.

Nach dem Einlegen der Trennscheibe 20 in die Vertiefung wird der überstehende Rand 43 mittels eines Stempels 44 über die Trennscheibe 20 gequetscht. Damit ist die Trennscheibe 20 ausreichend im Bodenbereich 40 der Kolbenstangenverlängerung 9 fixiert. Die axiale Fixierung der Trennscheibe 20 muss aufgrund der auf sie wirkenden geringen Druckdifferenzen zwischen dem unteren Teilraum 12 und der zentralen Bohrung 14 nicht sehr groß sein.

Wie in Fig. 7 angedeutet, wird der Stempel 44 seitlich an der inneren Wandung des Ausgleichsraums 8 geführt. Das Verquetschen der Trennscheibe 20 kann örtlich oder über den gesamten Umfang der Trennscheibe erfolgen.

### Bezugszeichenliste

- 1.: Dämpferrohr
- 2.: Kolbenstange
- 3.: Arbeitskolben
- 4.: Dämpfungsraum
- 5.: Dämpfungsraum
- 6.: Durchtrittskanal
- 7.: Federscheibenpaket
- 8.: Ausgleichsraum
- 9.: Kolbenstangenverlängerung
- 10.: Trennkolben
- 11.: Teilraum
- 12.: Teilraum
- 13.: Bohrung
- 14.: Bohrung
- 15.: Kolbengrundkörper
- 16.: Gleitmanschette
- 17.: axiale Durchdringung
- 18.: Puffer
- 19.: zentrale Wölbung
- 20.: Trennscheibe
- 21.: Durchdringung
- 22.: Boden
- 23.: Aufnahmezapfen
- 24.: Mutter
- 25.: Deckelfläche
- 26.: Wulst
- 27.: Vertiefung
- 29.: Boden
- 30.: Ende
- 31.: Wand
- 32.: Anschlussflansch
- 33.: Querbohrung
- 34.: Bund
- 35.: Schweißnaht
- 36.: Gehäuse
- 37.: Passstift
- 38.: Schweißnaht
- 39.: progressiver Kraftanstieg
- 40.: Bodenbereich
- 41.: Tiefe
- 42.: Dicke
- 43.: Rand
- 44.: Stempel

## Patentansprüche

1. Schwingungsdämpfer mit amplitudenabhängiger Dämpfung mit einem hydraulisch parallel zum Dämpferkolben angebundenen zylindrischen Ausgleichsraum (8), der durch einen axial verschieblichen Trennkolben (10) aufgeteilt ist, wobei der Trennkolben (10) an wenigstens einer Deckelfläche (25) mit einem elastisch nachgiebig ausgebildeten Puffer (18) ausgebildet ist, **dadurch gekennzeichnet, dass** der Puffer (18) in eine zentrale Bohrung (17) des Kolbengrundkörpers (15) eingesetzt ist.

2. Schwingungsdämpfer nach Anspruch 1, **dadurch gekennzeichnet, dass** der Puffer (18) in die Bohrung (17) einvulkanisiert und/oder durch Vulkanisieren mit der Deckelfläche (25) verbunden ist.

3. Schwingungsdämpfer nach Anspruch 1, **dadurch gekennzeichnet, dass** der Puffer (18) in die Bohrung (17) eingeklebt und/oder durch Verkleben mit der Deckelfläche (25) verbunden ist.

4. Schwingungsdämpfer nach Anspruch 1, **dadurch gekennzeichnet, dass** der Puffer (18) mit dem Kolbengrundkörper (15) durch Zwei-Komponenten-Kunststoffspritzgießen oder Zwei-Komponenten-Gummi/Kunststoffspritzguss hergestellt ist.

5. Schwingungsdämpfer nach einem oder mehreren der Ansprüche 1 bis 4, **dadurch gekennzeichnet, dass** der Puffer (18) die Deckelfläche (25) ringförmig überragt.

6. Schwingungsdämpfer nach einem oder mehreren der Ansprüche 1 bis 4, **dadurch gekennzeichnet, dass** der Puffer (18) die Deckelfläche (26) als zentrale Wölbung überragt.

7. Schwingungsdämpfer nach einem oder mehreren der Ansprüche 1 bis 6, **dadurch gekennzeichnet, dass** der Kolbengrundkörper (15) mit einem festen Anschlag, der seine Stirnfläche ringförmig überragt, ausgebildet ist.

8. Schwingungsdämpfer nach einem oder mehreren der Ansprüche 1 bis 7, **dadurch gekennzeichnet, dass** am Außenumfang des Kolbengrundkörpers (15) eine PTFE-Folie als Gleitmanschette (16) angeordnet ist.

9. Schwingungsdämpfer nach einem oder mehreren der Ansprüche 1 bis 7, **dadurch gekennzeichnet, dass** der Außenumfang des Kolbengrundkörpers mit einem Material mit guten Gleiteigenschaften beschichtet ist.

10. Schwingungsdämpfer nach einem oder mehreren der Ansprüche 1 bis 9, wobei der Ausgleichsraum (8) wenigstens einseitig über eine zentrale Bohrung (14) hydraulisch mit einem der beiden Dämpfungsräume (4, 5) des Schwingungsdämpfers verbunden ist, **dadurch gekennzeichnet, dass** die zentrale Bohrung (14) ausgleichsraumseitig durch eine Trennscheibe (20) abgedeckt ist und wenigstens eine randseitig angeordnete Durchdringung (21) durch die Trennscheibe (20) die zentrale Bohrung (14) hydraulisch mit dem Ausgleichsraum (8) verbindet.

11. Schwingungsdämpfer nach einem oder mehreren der Ansprüche 1 bis 9, wobei der Ausgleichsraum (8) wenigstens einseitig über eine zentrale Bohrung (14) hydraulisch mit einem der beiden Dämpfungsräume (4, 5) des Schwingungsdämpfers verbunden ist, **dadurch gekennzeichnet, dass** die zentrale Bohrung (14) ausgleichsraumseitig geschlossen als Sackbohrung ausgebildet ist und als Verbindung zum Ausgleichsraum wenigstens ein schräg zum Bodenrand des Ausgleichsraumes verlaufender Kanal vorgesehen ist.

12. Schwingungsdämpfer nach einem oder mehreren der Ansprüche 1 bis 11, **dadurch gekennzeichnet, dass** der Kolbengrundkörper (15) aus Leichtmetall wie z.B. einer Aluminiumlegierung besteht.

13. Schwingungsdämpfer nach einem oder mehreren der Ansprüche 1 bis 12, **dadurch gekennzeichnet, dass** der Ausgleichsraum (8) als Bohrung in der Kolbenstange ausgebildet ist.

14. Schwingungsdämpfer nach einem oder mehreren der Ansprüche 1 bis 12, **dadurch gekennzeichnet, dass** der zylindrische Ausgleichsraum (8) in einem separaten Gehäuse angeordnet ist, welches am Ende der Kolbenstange angebunden ist.

15. Schwingungsdämpfer nach Anspruch 14, **dadurch gekennzeichnet, dass** das eine Bohrung aufweisende Gehäuse auf einem am Ende der Kolbenstange angeordneten Zapfen oder direkt auf das Ende der Kolbenstange aufgeschoben ist.

16. Stoßdämpfer nach Anspruch 15, **dadurch gekennzeichnet, dass** der Zapfen am Ende der Kolbenstange durch einen in eine Zentrumsbohrung der Kolbenstange eingepressten Passstift gebildet wird.

17. Stoßdämpfer nach Anspruch 15 oder Anspruch 16, **dadurch gekennzeichnet, dass** das Gehäuse nach dem Aufschieben mit dem Zapfen und/oder mit der Kolbenstange und/oder der Passstift mit dem Ende der Kolbenstange verschweißt ist.

18. Stoßdämpfer nach einem oder mehreren der Ansprüche 15 bis 17, **dadurch gekennzeichnet, dass** die Bohrung im Gehäuse gegenüber dem Zapfen oder Pressstift am Ende der Kolbenstange oder gegenüber dem Ende der Kolbenstange ein derartiges Untermaß aufweist, dass eine Pressverbindung zwischen der Bohrung und dem Zapfen, dem Passstift oder der Kolbenstange entsteht.

19. Stoßdämpfer nach Anspruch 17 oder Anspruch 18, **dadurch gekennzeichnet, dass** die Schweißung mittels Laserschweißen erfolgt.

20. Stoßdämpfer nach einem oder mehreren der Ansprüche 17 bis 19, **dadurch gekennzeichnet, dass** das Schweißen umlaufend erfolgt.

21. Stoßdämpfer nach Anspruch 20, **dadurch gekennzeichnet, dass** das Schweißen in zwei Umläufen erfolgt, wobei beim ersten Umlauf nur ein Heftschweißen und beim zweiten Umlauf ein Verbindungsschweißen erfolgt.

22. Schwingungsdämpfer nach Anspruch 21, **dadurch gekennzeichnet, dass** die Schweißleistung beim Verbindungsschweißen am Anfang und/oder am Ende des Umlaufs ansteigt oder abfällt.

23. Schwingungsdämpfer nach einem oder mehreren der Ansprüche 1 bis 22, **dadurch gekennzeichnet, dass** das Gehäuse und/oder die Kolbenstange aus Stahl der Qualität 19 MnB4 besteht.

24. Schwingungsdämpfer nach Anspruch 10, **dadurch gekennzeichnet, dass** die Trennscheibe (20) in einer Vertiefung mit etwa dem Durchmesser der Trennscheibe (20) und einer Tiefe (41), die größer ist als die Dicke (42) der Trennscheibe (20), liegt und der überstehende Rand (43) der Vertiefung örtlich oder über den gesamten Umfang auf die Trennscheibe (20) verquetscht ist.

## Claims

1. Vibration damper having amplitude-dependent damping by means of a cylindrical equalisation chamber (8) which is connected hydraulically in parallel with the damping piston and is divided by an axially displaceable separating piston (10), wherein the separating piston (10) is formed on at least one cover surface (25) with a buffer (18) which is formed in a resiliently compliant manner, **characterised in that** the buffer (18) is inserted into a central bore (17) of the piston base body (15).

2. Vibration damper as claimed in Claim 1, **characterised in that** the buffer (18) is vulcanised into the bore (17) and/or is connected to the cover surface (25) by means of vulcanisation.

3. Vibration damper as claimed in Claim 1, **characterised in that** the buffer (18) is adhered into the bore (17) and/or is connected to the cover surface (25) by means of adhesion.

4. Vibration damper as claimed in Claim 1, **characterised in that** the buffer (18) is produced with the piston base body (15) by means of two-component synthetic material injection moulding or two-component rubber/synthetic material injection moulding.

5. Vibration damper as claimed in any one or more of Claims 1 to 4, **characterised in that** the buffer (18) annularly protrudes beyond the cover surface (25).

6. Vibration damper as claimed in any one or more of Claims 1 to 4, **characterised in that** the buffer (18) protrudes beyond the cover surface (26) as a central bulge.

7. Vibration damper as claimed in any one or more of Claims 1 to 6, **characterised in that** the piston base body (15) is formed with a fixed stop which annularly protrudes beyond its end surface.

8. Vibration damper as claimed in any one or more of Claims 1 to 7, **characterised in that** a PTFE sheet is disposed as a sliding sleeve (16) on the outer periphery of the piston base body (15).

9. Vibration damper as claimed in any one or more of Claims 1 to 7, **characterised in that** the outer periphery of the piston base body is coated with a material having good sliding properties.

10. Vibration damper as claimed in any one or more of Claims 1 to 9, wherein the equalisation chamber (8) is hydraulically connected at least on one side to one of the two damping chambers (4, 5) of the vibration damper via a central bore (14), **characterised in that** the central bore (14) is covered on the equalisation chamber-side by a separating disc (20) and at least one edge-side through-passage (21) through the separating disc (20) hydraulically connects the central bore (14) to the equalisation chamber (8).

11. Vibration damper as claimed in any one or more of Claims 1 to 9, wherein the equalisation chamber (8) is hydraulically connected at least on one side to one of the two damping chambers (4, 5) of the vibration damper via a central bore (14), **characterised in that** the central bore (14) is formed as a blind hole closed on the equalisation chamber-side and at least one channel extending in an inclined manner with respect to the base edge of the equalisation chamber is provided as the connection to the equalisation chamber.

12. Vibration damper as claimed in any one or more of Claims 1 to 11, **characterised in that** the piston base body (15) consists of light metal such as for example an aluminium alloy.

13. Vibration damper as claimed in any one or more of Claims 1 to 12, **characterised in that** the equalisation chamber (8) is formed as a bore in the piston rod.

14. Vibration damper as claimed in any one or more of Claims 1 to 12, **characterised in that** the cylindrical equalisation chamber (8) is disposed in a separate housing which is connected to the end of the piston rod.

15. Vibration damper as claimed in Claim 14, **characterised in that** the housing comprising a bore is slid on a pin disposed on the end of the piston rod or is slid directly onto the end of the piston rod.

16. Shock absorber as claimed in Claim 15, **characterised in that** the pin on the end of the piston rod is formed by an aligning pin pressed into a central bore of the piston rod.

17. Shock absorber as claimed in Claim 15 or Claim 16, **characterised in that** after being slid on, the housing is welded to the pin and/or to the piston rod and/or the aligning pin is welded to the end of the piston rod.

18. Shock absorber as claimed in any one or more of Claims 15 to 17, **characterised in that** the bore in the housing is undersized with respect to the pin or the aligning pin on the end of the piston rod or with respect to the end of the piston rod such that a press connection is produced between the bore and the pin, the aligning pin or the piston rod.

19. Shock absorber as claimed in Claim 17 or Claim 18, **characterised in that** the welding is performed by means of laser welding.

20. Shock absorber as claimed in any one or more of Claims 17 to 19, **characterised in that** the welding is performed in a revolving manner.

21. Shock absorber as claimed in Claim 20, **characterised in that** the welding is performed in two revolutions, wherein in the first revolution only tack welding is performed and in the second revolution joint welding is performed.

22. Vibration damper as claimed in Claim 21, **characterised in that** the welding power during joint welding rises or falls at the beginning and/or at the end of the revolution.

23. Vibration damper as claimed in any one or more of Claims 1 to 22, **characterised in that** the housing and/or the piston rod consists of 19 MnB4 steel.

24. Vibration damper as claimed in Claim 10, **characterised in that** the separating disc (20) lies in a depression having a diameter approximately equal to that of the separating disc (20) and having a depth (41) which is greater than the thickness (42) of the separating disc (20) and the protruding edge (43) of the depression is crimped onto the separating disc (20) in places or over the entire periphery.

## Revendications

1. Amortisseur à amortissement dépendant de l'amplitude, avec une chambre de compensation (8) cylindrique, reliée hydrauliquement en parallèle par rapport au piston de l'amortisseur, laquelle est divisée par un piston séparateur (10) mobile axialement, ledit piston séparateur (10) étant formé, au moins sur une surface de couvercle (25), avec un butoir (18) élastiquement déformable, **caractérisé en ce que** le butoir (18) est inséré dans un alésage central (17) du corps de base (15) du piston.

2. Amortisseur selon la revendication 1, **caractérisé en ce que** le butoir (18) est vulcanisé dans l'alésage (17) et/ou relié par vulcanisation à la surface de couvercle (25)

3. Amortisseur selon la revendication 1, **caractérisé en ce que** le butoir (18) est collé dans l'alésage (17) et/ou relié par collage à la surface de couvercle (25).

4. Amortisseur selon la revendication 1, **caractérisé en ce que** le butoir (18) est fabriqué avec le corps de base (15) du piston par moulage par injection de matière synthétique à deux composants, ou par moulage par injection de matière synthétique/caoutchouc à deux composants.

5. Amortisseur selon une ou plusieurs des revendications 1 à 4, **caractérisé en ce que** le butoir (18) fait saillie, en forme d'anneau, par rapport à la surface de couvercle (25).

6. Amortisseur selon une ou plusieurs des revendications 1 à 4, **caractérisé en ce que** le butoir (18) fait saillie, sous le forme d'une convexité centrale, par rapport à la surface de couvercle (25).

7. Amortisseur selon une ou plusieurs des revendications 1 à 6, **caractérisé en ce que** le corps de base (15) du piston est réalisé avec une butée rigide qui fait saillie, en forme d'anneau, par rapport à sa surface frontale.

8. Amortisseur selon une ou plusieurs des revendications 1 à 7, **caractérisé en ce que**, à la périphérie du corps de base (15) du piston, est agencée une manchette de glissement(16) en PTFE.

9. Amortisseur selon une ou plusieurs des revendications 1 à 7, **caractérisé en ce que** la périphérie du corps de base du piston est revêtue d'un matériau qui présente de bonnes propriétés de glissement.

10. Amortisseur selon une ou plusieurs des revendications 1 à 9, dans lequel la chambre de compensation (8) est reliée hydrauliquement, au moins d'un côté, à l'une des deux chambres d'amortissement (4, 5) de l'amortisseur par l'intermédiaire d'un alésage central (14), **caractérisé en ce que** l'alésage central (14) est recouvert, côté chambre de compensation, par une plaque de séparation (20), et qu'au moins un passage marginal (21) à travers la plaque de séparation (20), relie hydrauliquement l'alésage central (14) à la chambre de compensation (8).

11. Amortisseur selon une ou plusieurs des revendications 1 à 9, dans lequel la chambre de compensation (8) est reliée hydrauliquement, au moins d'un côté, à l'une des deux chambres d'amortissement (4, 5) de l'amortisseur par l'intermédiaire d'un alésage central (14), **caractérisé en ce que** l'alésage central (14) est réalisé en tant que trou borgne, fermé du côté de la chambre de compensation, et **en ce que**, comme raccordement à la chambre de compensation, est prévu au moins un canal qui s'étend en oblique vers le bord du fond de la chambre de compensation.

12. Amortisseur selon une ou plusieurs des revendications 1 à 11, **caractérisé en ce que** le corps de base (15) du piston est en métal léger, comme par exemple un alliage d'aluminium.

13. Amortisseur selon une ou plusieurs des revendications 1 à 12, **caractérisé en ce que** la chambre de compensation (8) est réalisée sous la forme d'un alésage dans la tige de piston.

14. Amortisseur selon une ou plusieurs des revendications 1 à 12, **caractérisé en ce que** la chambre de compensation cylindrique (8) est agencée dans un boîtier séparé, qui est lié à l'extrémité de la tige de piston.

15. Amortisseur selon la revendication 14, **caractérisé en ce que** le boîtier présentant un alésage est glissé sur une broche agencée à l'extrémité de la tige de piston, ou directement sur l'extrémité de la tige de piston.

16. Amortisseur selon la revendication 15, **caractérisé en ce que** la broche à l'extrémité de la tige de piston est formée par un goujon de centrage enfoncé dans un alésage central de la tige de piston.

17. Amortisseur selon la revendication 15 ou la revendication 16, **caractérisé en ce que** le boîtier est soudé à l'extrémité de la tige de piston, après avoir été enfilé sur la broche et/ou la tige de piston et/ou le goujon de centrage.

18. Amortisseur selon une ou plusieurs des revendications 15 à 17, **caractérisé en ce que** l'alésage dans le boîtier présente par rapport à la broche ou au goujon de centrage à l'extrémité de la tige de piston, ou par rapport à l'extrémité de la tige de piston, une dimension inférieure telle qu'un ajustement serré est réalisé entre l'alésage et la broche, le goujon de centrage ou la tige de piston.

19. Amortisseur selon la revendication 17 ou la revendication 18, **caractérisé en ce que** la soudure est effectuée par soudage au laser.

20. Amortisseur selon une ou plusieurs des revendications 17 à 19, **caractérisé en ce que** le soudage a lieu en continu.

21. Amortisseur selon la revendication 20, **caractérisé en ce que** le soudage est effectué en deux cycles, seulement un soudage de pointage étant exécuté au cours du premier cycle, et un soudage d'assemblage au cours du deuxième cycle.

22. Amortisseur selon la revendication 21, **caractérisé en ce que** la vitesse de dépôt lors du soudage d'assemblage croît ou décroît au début et/ou la fin du cycle.

23. Amortisseur selon une ou plusieurs des revendications 1 à 22, **caractérisé en ce que** le boîtier et/ou la tige de piston sont en acier de qualité 19 MnB4.

24. Amortisseur selon la revendication 10, **caractérisé en ce que** la plaque de séparation (20) est logée dans une gorge qui présente environ le diamètre de la plaque de séparation (20), et une épaisseur (41) qui est supérieure à l'épaisseur (42) de la plaque de séparation (20), et **en ce que** le bord saillant (43) de la cavité est écrasé sur la plaque de séparation (20), localement ou sur tout le pourtour.
